# EUROPÄISCHE PATENTSCHRIFT

(11) **EP 0 339 364 B1**
(45) Veröffentlichungstag und Bekanntmachung des Hinweises auf die Patenterteilung: **02.03.1994**
(21) Anmeldenummer: 89106464.4
(22) Anmeldetag: 12.04.1989
(51) Int. Cl.: F16J 15/12, F16J 15/10, F16L 23/16

(54) **Flachdichtung**
Flat packing
Garniture plate

(30) Priorität: 19.04.1988 DE 3812976
(43) Veröffentlichungstag der Anmeldung: 02.11.1989
(73) Patentinhaber: HOECHST AKTIENGESELLSCHAFT, 65926 Frankfurt am Main (DE)
(72) Erfinder: Höltermann, Rolf, D-8265 Neuötting (DE); Krause, Alfred, D-8269 Burgkirchen (DE)

(56) Entgegenhaltungen:
- DE-A- 2 448 963
- FR-A- 2 542 913
- US-A- 3 775 832

## Beschreibung

Die Erfindung betrifft eine Flachdichtung aus einem ringförmigen Kern und einem den Kern umschließenden Überzug, wobei der Kern aus einem härteren Material als das des Überzugs besteht und wobei ferner der Kern eine Kreisringplatte ist, deren Kreisflächen jeweils mindestens eine konzentrisch verlaufende Nut aufweisen, und der Überzug als eine im Querschnitt U-förmige und die Kreisringplatte bis auf ihre gebogene schmale Außenfläche umschließende Kunststoffhülle ausgebildet ist, deren Innenflächen mit in den Nuten der Kreisringplatte eingreifenden und daraus lösbaren Wülsten versehen sind.

Eine solche Flachdichtung ist in FR-A 2 542 913 beschrieben. Nachteilig ist dabei, daß der Druck, den der Überzug (die Kunststoffhülle) auf die abzudichtenden Flächen ausübt, zu wünschen übrig läßt.

Die Aufgabe der Erfindung besteht demnach darin, die bekannte Flachdichtung derart auszugestalten, daß die Kunststoffhülle im abgedichteten Zustand mit einem möglichst großen Druck auf die abzudichtenden Flächen wirkt.

Diese Aufgabe wird bei der eingangs genannten Flachdichtung dadurch gelöst, daß die Tiefe der Nut(en) 10 bis 40 %, vorzugsweise 20 bis 30 %, kleiner ist als die Höhe des Wulstes und das Volumen der Nut(en) gleich dem oder bis zu 20 %, vorzugsweise bis zu 10 %, kleiner als das Volumen des Wulstes ist.

Mit dem erfindungsgemäßen Merkmal in der Beziehung zwischen der Größe der Nut und der Größe des Wulstes wird eine besonders wirkungsvolle Abdichtung erreicht, weil der vom gesamten Überzug ausgehende Druck wesentlich erhöht ist.

Die Kreisringplatte besteht vorzugsweise aus Hartgummi oder einem Metall. Im Falle von Metall ist Stahl der bevorzugte Werkstoff. Im Falle von Hartgummiplatten sind solche bevorzugt, die eine Härte von 75 bis 95 Shore D aufweisen. Die Kreisringplatte, deren Stärke im allgemeinen im Bereich von 2 bis 8 mm liegt, hat an den beiden (ebenen) Kreisflächen in der Regel jeweils eine konzentrisch angeordnete Nut, die vorzugsweise im wesentlichen in der Mitte der Fläche liegt. Das Verhältnis der Breite einer Nutöffnung zur Breite der Kreisfläche kann in weiten Grenzen variieren. Es liegt im allgemeinen bei etwa 1 : 3. Die Beziehung zwischen Nuttiefe und Dicke der Kreisringplatte wird im allgemeinen so gewählt, daß ein Verhältnis von höchstens etwa 1 : 2,3 vorliegt.

Was die Nutform betrifft, so sind verschiedene geometrische Ausbildungen geeignet, beispielsweise quadratische, rechteckförmige, trapezartige oder gerundete, wobei diese letzteren bevorzugt sind. Eine besonders vorteilhafte Nutform ist die halbkreisförmige.

Die mit Nuten versehene Kreisringplatte als Dichtungskern ist mit einer im Querschnitt U-förmigen Kunststoffhülle, bevorzugt auf Basis natürlicher oder synthetischer Elastomere, umgeben, die den weiteren Teil der Dichtung darstellt. Diese Hülle ist so gestaltet, daß sie von der Kreisringplatte zerstörungsfrei abgenommen und wieder aufgebracht werden kann, also auswechselbar ist. In der Draufsicht stellt die Kunststoffhülle ebenso wie der Dichtungskern eine Kreisringplatte dar, die den Kern an drei Seiten U-förmig oder taschenartig so umschließt, daß nur seine gebogne schmale Außenfläche (äußere Umfangsfläche) unbedeckt ist. Die außen mehr oder weniger glatt ausgebildete Kunststoffhülle (Kunststoffmantel) ist ferner innen mit Wülsten ausgestattet, auch Erhebungen oder Federn genannt, welche die Hülle an der Kreisringplatte fixieren und andererseits den Nuten der Kreisringplatte derart entsprechen, daß sie in diese eingelegt und daraus auch losgelöst werden können. Die ebenso wie die Nuten konzentrisch verlaufenden Wülste befinden sich also auf den beiden Innenseiten der die beiden Kreisflächen der Kernplatte abdeckenden U-förmigen Hülle. Der Kunststoff, aus dem die Hülle gebildet ist, wird dem abzudichtenden Fall angepaßt sein, so daß die verschiedensten Kunststoffarten in Betracht kommen. Aufgrund seiner speziellen Eigenschaften ist Gummi der bevorzugte Kunststoff. Die Hülle besteht daher vorzugsweise aus Weichgummi. Dabei hat sich eine Härte von 50 bis 80 Shore A, vorzugsweise 60 bis 75 Shore A, als vorteilhaft erwiesen. Die Weichgummihülle der Dichtung ist im Falle von Flanschverbindungen an Rohren für Rauchgas-Entschwefelungsanlagen härter ausgebildet als die überdeckende Weichgummierung (der Erosionsschutz) im Rohr, deren (dessen) Härte im allgemeinen bei 40 bis 70 Shore A liegt. Die Kunststoffhülle kann ebenso wie die bekannten Überzüge flach oder ballig (linsenförmig) und dergleichen ausgebildet sein. Die Dicke der Außenflächen oder Kreisflächen der im Querschnitt U-förmigen Hülle liegt im allgemeinen im Bereich von 0,5 bis 5 mm, wobei der Hüllenboden vorzugsweise stärker als die Kreisflächen, und damit als Erosionsschutz ausgebildet ist.

Zur Herstellung der erfindungsgemäßen Dichtung werden zunächst die beiden Teile gefertigt, nämlich die Kreisringplatte mit den Ringnuten und die U-förmige Kunststoffhülle mit den Ringwülsten. Die Fertigung der Platte braucht im einzelnen wohl nicht weiter beschrieben werden. Die Kunststoffhülle wird im Falle von Gummi zweckmäßigerweise durch Preßformung und Vulkanisation gefertigt. Im Falle anderer Kunststoffe kann das Spritzgußverfahren die geeignete Variante sein. Die beiden Teile werden dann zur fertigen Dichtung zusammengefügt, indem die Platte in die Hülle hineingebracht wird.

Die erfindungsgemäße Flachdichtung weist eine Reihe von Vorteilen auf. Sie ist besonders geeignet zur Abdichtung von Flanschverbindungen, wie sie bei Rohrleitungen, Apparaten, Autoklaven, Behälterabdeckungen und dergleichen vorliegen, die korrosions- und erosionsmäßig geschützt werden müssen. Durch die Kontur dieser Dichtung werden die Dichtungskräfte in dem Kern der Kreisringplatte über die Nuten und den Wulst aufgenommen, ohne daß Schubkräfte auf die Auskleidung der Flansche, besonders im Übergangsbereich zwischen der Hart- und Weichgummierung, übertragen werden. Bei entsprechender Wahl des Dichtungsinnendurchmessers, das heißt der Dicke des Bodens der U-förmigen Hülle, und des Weichgummis der Hülle können auch erosive Beanspruchungen leicht aufgefangen werden. Ebenso kann der Dichtungsdruck auf das Erosionsschutzmaterial bei Rohren von Rauchgas-Entschwefelungsanlagen durch entsprechende Härte- und Stoffwahl oder durch eine Reduzierung der Dicke der Dichtung im Bereich des Hüllenbodens vermindert werden; durch diese sogenannte minimale Toleranz der Dicke der Dichtung wird der Erosionsschutz (die Weichgummierung am Flansch) beträchtlich entlastet.

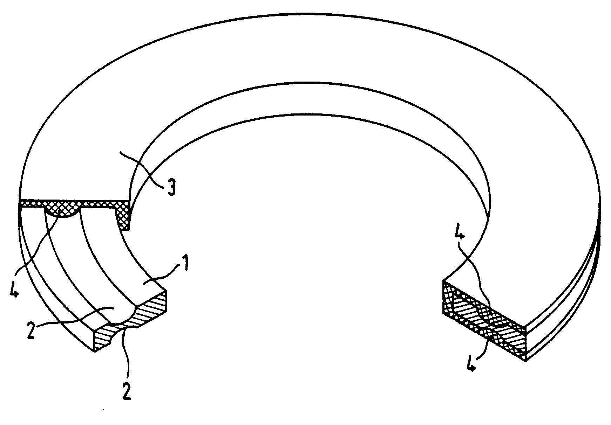

Im folgenden wird die Erfindung anhand einer in der Zeichnung dargestellten Ausführungsform noch näher erläutert.

Die Figur zeigt eine erfindungsgemäße Flachdichtung, die in perspektivischer- und in Querschnittform dargestellt ist, für eine Rohrflanschverbindung. Die dargestellte Flachdichtung besteht aus einer im Querschnitt flach ausgebildeten Kreisringplatte 1 aus Stahl, die beidseitig mit je einer Ringnut 2 versehen ist, und einem Weichgummiüberzug 3, der die Kreisringplatte 1 U-förmig von innen nach außen umschließt. Die beiden Ringnuten 2 befinden sich auf den beiden Kreisflächen der Kreisringplatte 1 jeweils in deren Flächenmitte. Die konzentrisch verlaufenden Nuten 2 sind halbkreisförmig ausgebildet. Die Stahl-Kreisringplatte 1 ist 5 mm dick und ihre Kreisflächen sind 24 mm breit. Die Breite der Öffnung der Ringnuten 2 beträgt 8 mm und ihre Tiefe 1,5 mm. Das Verhältnis der Breite der Nutöffnung zur Breite der Kreisfläche der Platte 1 beträgt also 1 : 3 und jenes der Nuttiefe zur Dicke der Platte 1 1 : 3,3. Die im Querschnitt U-förmige Weichgummihülle 3, welche die Kreisringplatte 1 bis auf ihre äußere Stirnfläche umschließt und eine Härte von 65 Shore A besitzt, ist an ihren Außenflächen glatt ausgebildet. An den beiden, die Kreisflächen der Platte 1 abdeckenden Innenflächen der Hülle 3 befinden sich die Ringwülste oder Ringfedern 4, die den Nuten 2 angepaßt sind und darin verlaufen. Die Tiefe der Nuten 2 ist 25 % kleiner als die Höhe des Wulstes 4 und ihr Volumen 10 % kleiner als das des Wulstes 4. Die abdichtenden Außenflächen der Weichgummihülle 3 sind flach gestaltet. Die Dicke der Außenflächen ist geringer als die Dicke des Bodens der U-förmigen Hülle 3.

## Patentansprüche

1. Flachdichtung aus einem ringförmigen Kern und einem den Kern umschließenden Überzug, wobei der Kern aus einem härteren Material als das des Überzugs besteht und wobei ferner der Kern eine Kreisringplatte (1) ist, deren Kreisflächen jeweils mindestens eine konzentrisch verlaufende Nut (2) aufweisen, und der Überzug als eine im Querschnitt U-förmige und die Kreisringplatte (1) bis auf ihre gebogene schmale Außenfläche umschließende Kunststoffhülle (3) ausgebildet ist, deren Innenflächen mit in den Nuten (2) der Kreisringplatte (1) eingreifenden und daraus lösbaren Wülsten (4) versehen sind, dadurch gekennzeichnet, daß die Tiefe der Nut(en) (2) 10 bis 40 % kleiner ist als die Höhe des Wulstes (4) und das Volumen der Nut(en) (2) gleich dem oder bis zu 20 % kleiner als das Volumen des Wulstes (4) ist.

2. Flachdichtung nach Anspruch 1, dadurch gekennzeichnet, daß die Kreisringplatte (1) aus Hartgummi oder einem Metall besteht.

3. Flachdichtung nach Anspruch 2, dadurch gekennzeichnet, daß die beiden Kreisflächen der Kreisringplatte (1) jeweils eine konzentrische Nut (2) aufweisen und die beiden Nuten (2) jeweils im wesentlichen in der Flächenmitte angeordnet sind.

4. Flachdichtung nach Anspruch 3, dadurch gekennzeichnet, daß das Verhältnis der Breite der Öffnung der Nut (2) zur Breite der Kreisfläche der Kreisringplatte (1) etwa 1 : 3 beträgt.

5. Flachdichtung nach Anspruch 4, dadurch gekennzeichnet, daß das Verhältnis der Tiefe der Nut (2) zur Dicke der Kreisringplatte (1) höchstens 1 : 2,3 beträgt.

6. Flachdichtung nach Anspruch 5, dadurch gekennzeichnet, daß die Nuten (2) halbkreisförmig ausgebildet sind.

7. Flachdichtung nach Anspruch 6, dadurch gekennzeichnet, daß die Kunststoffhülle (3) aus Weichgummi besteht.

8. Flachdichtung nach Anspruch 7, dadurch gekennzeichnet, daß die Kreisringplatte (1) aus Hartgummi mit einer Shore D-Härte 75 bis 95 Shore D oder aus Stahl und die Kunststoffhülle (3) aus Weichgummi mit einer Shore A-Härte von 50 bis 80 Shore A besteht.

9. Flachdichtung nach Anspruch 8, dadurch gekennzeichnet, daß die Außenflächen der Weichgummihülle (3) flach oder ballig ausgebildet sind.

10. Flachdichtung nach Anspruch 9, dadurch gekennzeichnet, daß der Boden der Kunststoffhülle (3) als Erosionsschutz ausgebildet ist.

## Claims

1. A flat gasket comprising an annular core and a covering enclosing the core, the core being composed of a harder material than that of the covering and the core, furthermore, being a circular annular plate (1) whose circular surfaces have in each case at least one concentrically running groove (2) and the covering being designed as a plastic casing (3) which is U-shaped in cross-section and encloses the circular annular plate (1) with the exception of its curved narrow outer surface and whose inner surfaces are provided with beads (4) which engage in the grooves (2) of the circular annular plate (1) and can be detached therefrom, wherein the depth of the groove(s) (2) is 10 to 40% smaller than the height of the bead (4) and the volume of the groove(s) (2) is equal to or up to 20% smaller than the volume of the bead (4).

2. The flat gasket as claimed in claim 1, wherein the circular annular plate (1) is composed of hard rubber or a metal.

3. The flat gasket as claimed in claim 2, wherein the two circular surfaces of the circular annular plate (1) each have a concentric groove (2) and the two grooves (2) are each arranged essentially in the surface center.

4. The flat gasket as claimed in claim 3, wherein the ratio of the width of the opening of the groove (2) to the width of the circular surface of the circular annular plate (1) is approximately 1 : 3.

5. The flat gasket as claimed in claim 4, wherein the ratio of the depth of the groove (2) to the thickness of the circular annular plate (1) is at most 1 : 2.3.

6. The flat gasket as claimed in claim 5, wherein the grooves (2) are designed so as to be semicircular.

7. The flat gasket as claimed in claim 6, wherein the plastic casing (3) is composed of soft rubber.

8. The flat gasket as claimed in claim 7, wherein the circular annular plate (1) is composed of hard rubber with a Shore-D hardness of 75 to 95 or of steel and the plastic casing (3) is composed of soft rubber with a Shore-A hardness of 50 to 80.

9. The flat gasket as claimed in claim 8, wherein the outer surfaces of the soft rubber casing (3) are designed so as to be flat or convex.

10. The flat gasket as claimed in claim 9, wherein the base of the plastic casing (3) is designed as erosion protection.

## Revendications

1. Garniture plate composée d'un noyau annulaire et d'un revêtement recouvrant le noyau, ce dernier étant en un matériau plus dur que celui du revêtement et étant en outre une plaque (1) on forme de couronne dont les surfaces présentent au moins une gorge (2) s'étendant de manière concentrique, le revêtement étant formé comme une gaine (3) plastique à section transversale en U entourant la plaque (1) à l'exception de sa surface extérieure coudée étroite, gaine dont la surface intérieure est pourvue de bourrelets (4) coopérant avec la gorge (2) de la plaque (1) de manière amovible, caractérisée en ce que la profondeur de(s) la gorge(s) (2) est inférieure de 10 à 40 % à la hauteur du bourrelet (4) et le volume de(s) la gorge(s) (2) est égal ou jusqu'à 20 % inférieur au volume du bourrelet (4).

2. Garniture plate selon la revendication 1, caractérisée en ce que la plaque (1) en forme de couronne se compose d'ébonite ou d'un métal.

3. Garniture plate selon la revendication 2, caractérisée on ce que les deux surfaces de la plaque (1) en forme de couronne présentent chacune une gorge (2) concentrique, et en ce que les deux gorges (2) sont chacune disposées sensiblement au milieu de la surface.

4. Garniture plate selon la revendication 3, caractérisée en ce que le rapport entre la largeur de l'ouverture de la gorge (2), et la largeur de la surface de la plaque (1) en forme de couronne, est environ de 1 : 3.

5. Garniture plate selon la revendication 4, caractérisée en ce que le rapport entre la profondeur de la gorge (2) et l'épaisseur de la plaque (1) en forme de couronne est au plus de 1 : 2,3.

6. Garniture plate selon la revendication 5, caractérisée en ce que les gorges (2) sont construites de manière semi-circulaire.

7. Garniture plate selon la revendication 6, caractérisée en ce que la gaine (3) en matière plastique se compose de caoutchouc tendre.

8. Garniture plate selon la revendication 7, caractérisée en ce que la plaque (1) en forme de couronne est composée d'ébonite présentant une dureté Shore D de 75 à 95, ou bien en acier, et en ce que la gaine (3) en plastique se compose de caoutchouc tendre présentant une dureté Shore A de 50 à 80 .

9. Garniture plate selon la revendication 8, caractérisée en ce que les surfaces extérieures de la gaine (3) plastique sont construites plates ou convexes.

10. Garniture plate salon la revendication 9, caractérisée en ce que le fond de la gaine (3) plastique est construit de manière à protéger de l'érosion.
